Europäisches Patentamt

European Patent Office

Office européen des brevets

(19)

(11) **EP 0 752 058 B1**

(12) **EUROPÄISCHE PATENTSCHRIFT**

(45) Veröffentlichungstag und Bekanntmachung des Hinweises auf die Patenterteilung:
**10.02.1999 Patentblatt 1999/06**

(21) Anmeldenummer: **95938354.8**

(22) Anmeldetag: **30.11.1995**

(51) Int Cl.⁶: **F02D 41/18**, F02D 43/00, F02D 41/04, F02D 33/02

(86) Internationale Anmeldenummer:
**PCT/DE95/01688**

(87) Internationale Veröffentlichungsnummer:
**WO 96/21100 (11.07.1996 Gazette 1996/31)**

(54) **EINRICHTUNG ZUR LASTERFASSUNG BEI EINER BRENNKRAFTMASCHINE MIT TURBOLADER**

DEVICE FOR MEASURING THE LOAD ON A TURBOCHARGED INTERNAL-COMBUSTION ENGINE

DISPOSITIF DE DETERMINATION DE LA CHARGE POUR UN MOTEUR A COMBUSTION INTERNE EQUIPE D'UN TURBOCOMPRESSEUR

(84) Benannte Vertragsstaaten:
**DE ES FR GB IT SE**

(30) Priorität: **31.12.1994 DE 4447304**
**10.03.1995 DE 19508641**

(43) Veröffentlichungstag der Anmeldung:
**08.01.1997 Patentblatt 1997/02**

(73) Patentinhaber: **ROBERT BOSCH GMBH**
**70442 Stuttgart (DE)**

(72) Erfinder:
• **DENZ, Helmut**
**D-70176 Stuttgart (DE)**
• **BÖTTCHER, Klaus**
**D-71739 Oberriexingen (DE)**

(56) Entgegenhaltungen:
EP-A- 0 291 953      EP-A- 0 323 754
EP-A- 0 339 638      EP-A- 0 404 392
FR-A- 2 514 825

• **PATENT ABSTRACTS OF JAPAN vol. 13 no. 365 (M-859) ,15. August 1989 & JP,A,01 121527 (FUJI HEAVY IND LTD) 15.Mai 1989,**

**Beschreibung**

Stand der Technik

Die Erfindung geht aus von einer Einrichtung zur Lasterfassung bei einer Brennkraftmaschine nach der Gattung des Hauptanspruchs.

Die Last einer Brennkraftmaschine ist eine für die Regelung der Brennkraftmaschine sehr bedeutsame Größe. Es ist daher üblich, die Last mit Hilfe eines Sensors, beispielsweise eines Luftmassenmessers zu ermitteln und zusätzlich eine weitere Lasterfassung durchzuführen. Das vom Lastsensor gelieferte Signal wird dabei üblicherweise als Hauptlastsignal bezeichnet. Das auf andere Weise ermittelte Signal ist das sogenannte Nebenlastsignal. Es wird beispielsweise aus dem ohnehin gemessenen Drosselklappenwinkel sowie der ebenfalls laufend ermittelten Drehzahl der Brennkraftmaschine berechnet. Damit eine exakte Regelung der Brennkraftmaschine möglich ist, muß das Nebenlastsignal einer Dichtekompensation unterworfen werden.

Für Brennkraftmaschinen ohne Turbolader ist eine solche Dichtekompensation des Nebenlastsignales über Temperatur-und/oder Druck- bzw. Höhenkompensation aus der DE-P 43 22 281 bereits bekannt. Für Brennkraftmaschinen mit Turbolader ergeben sich jedoch zusätzliche Bedingungen, für die die bei üblichen Brennkraftmaschinen ablaufenden Nebenlastsignalermittlungen nicht ausreichen.

Vorteile der Erfindung

Die erfindungsgemäße Einrichtung mit den Merkmalen des Anspruchs 1 hat den Vorteil, daß eine besonders zuverlässige Lasterfassung bei einer Brennkraftmaschine mit Turbolader möglich ist. Dabei ist besonders vorteilhaft, daß die Nebenlastsignalerfassung an verschiedene turbospezifische Bedingungen anpaßbar ist. Erzielt werden diese Vorteile, indem das Nebenlastsignal je nach erkannter Bedingung nach verschiedenen Algorithmen unter Berücksichtigung verschiedener Korrekturfaktoren berechnet wird. Es wird also bei der Berechnung des Nebenlastsignales unterschieden, ob sich die Brennkraftmaschine in einem mit einem Saugmotor vergleichbaren Betriebsbereich befindet, ob ein Ladebereich mit gesteuertem Betrieb erreicht ist oder ob ein Ladebereich mit Luftmassen- oder Ladedruckregelung vorliegt.

Weitere Vorteile der Erfindung werden mit Hilfe der in den Unteransprüchen aufgeführten Maßnahmen erzielt. Dabei ist ein weiterer Vorteil darin zu sehen, daß für die Ermittlung des korrigierten Nebenlastsignales nur ohnehin vorhandene Größen ausgewertet werden. Weiterhin ist vorteilhaft, daß alle Berechnungen im ohnehin vorhandenen Steuergerät der Brennkraftmaschine ablaufen können. Da ein Nebenlastsignal erhalten wird, das besonders genau ist und an die herrschenden Bedingungen optimal angepaßt ist, kann ausgehend von diesem Nebenlastsignal ein Notlauf der Brennkraftmaschine stattfinden, wenn der Hauptlastsensor defekt ist bzw. wenn irgendein Fehler in der Hauptlastsignalermittlung auftritt.

Zeichnung

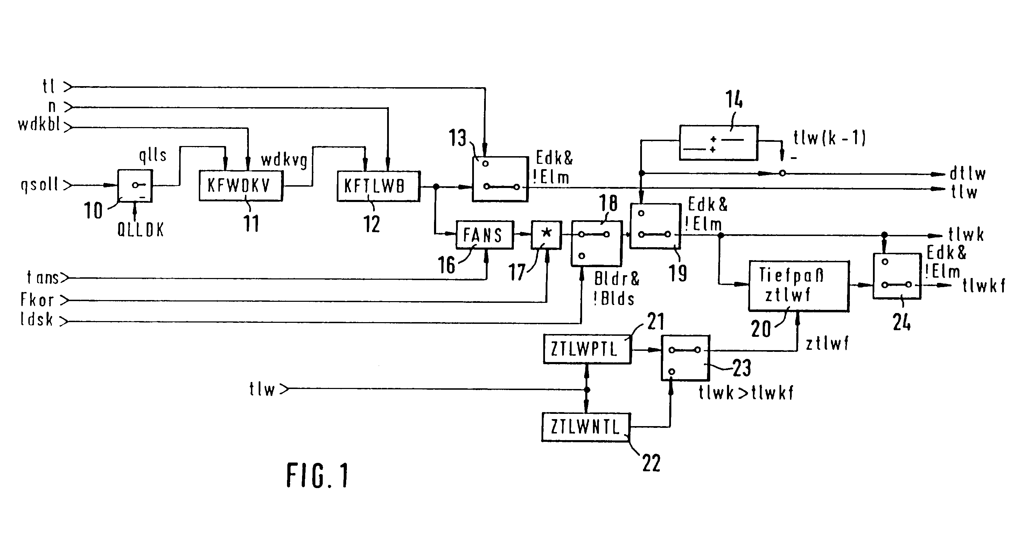

Ein Ausführungsbeispiel der Erfindung ist in der einzigen Figur der Zeichnung dargestellt und wird in der nachfolgenden Beschreibung näher erläutert.

Beschreibung des Ausführungsbeispieles

In der Figur ist ein Ablaufdiagramm dargestellt, aus dem entnehmbar ist, wie das korrigierte Nebenlastsignal bei einem Motor mit Turbolader unter Berücksichtigung verschiedener Ausgangsgrößen gebildet wird. Diese Ermittlung läuft üblicherweise im Steuergerät der Brennkraftmaschine ab. Da Brennkraftmaschinen mit Turbolader einschließlich der zugehörigen Sensoren bereits in anderen Druckschriften beschrieben sind, beispielsweise in der DE-P 42 19 791, soll an dieser Stelle auf eine solche Beschreibung verzichtet werden.

Aus den bekanntermaßen gemessenen oder berechneten Größen Hauptlastsignal tl, Drehzahl n, Drosselklappenwinkel bezogen auf Leerlaufwinkel wdkbl, Luftmassenstrom über Bypaß qsoll, Temperatur der Ansaugluft tans, Faktor für die Drosselklappenhöhenadaption fdkha sowie dem korrigierten Ladedruckregler-Sollwert ldsk wird das korrigierte Nebenlastsignal tlwk im Steuergerät berechnet.

Im einzelnen wird im Block 10 vom ermittelten Luftmassenstrom über den Bypaß qsoll der Luftfluß durch die geschlossene Drosselklappe (Leckluft) Qlldk subtrahiert, zur Bildung der Größe qlls, die den tatsächlichen Luftmassenstrom über den Bypaßsteller darstellt.

Dieser Luftmassenstrom über den Bypaßsteller qlls wird im Block 11 zusammen mit dem auf Leerlauf bezogenen Drosselklappenwinkel wdkbl sowie dem Kennfeld KFWDKV für den virtuellen Drosselklappenwinkel aus der Bypaßkorrektur zum gesamten virtuellen Drosselklappenwinkel wdkvg verwertet.

Im Block 12 wird aus dem Nebenlastsignal-Kennfeld aus Drosselklappenwinkel inklusive Bypaßkorrektur für den berechneten virtuellen Drosselklappenwinkel gesamt wdkvg sowie der gemessenen Drehzahl der Brennkrafmaschine n ein geeigneter Wert gebildet, der das noch nicht dichte korrigierte Nebenlastsignal tlw darstellt. Die Applikation des tlw-Kennfeldes (KFTLWB) erfolgt im gesteuerten (nicht geregelten) Betrieb.

Im Block 13 wird eine Fehlererkennung durchgeführt. Dabei wird geprüft, ob ein Fehler des Drosselklappensensors vorliegt und es wird geprüft, ob ein Fehler des Hauptlastsensors erkannt wurde. Je nach Ergebnis wird im Block 13 umgeschaltet und entweder das am Ausgang des Blockes 12 erhaltene Nebenlastsignal tlw wird weitergeleitet oder es wird das Hauptlastsignal tl als Nebenlastsignal tlw weitergeleitet.

Aus dem am Ausgang des Blockes 13 anstehenden Nebenlastsignal tlw kann ein weiteres Signal Deltalastsignaldrosselklappe dtlw gebildet werden, indem das Nebenlastsignal im Block 14 mit einem Schwellwert verglichen wird und das so erhaltene Ausgangssignal tlw(k-1) mit dem Lastsignal tlw verglichen wird.

Durch Multiplikation des Nebenlastsignales tlw mit dem Ansaugluftkorrekturfaktor FANS (Block 16) und dem Höhenkorrektur-Faktor fdkha (Block 17) ergibt sich das dichtekorrigierte Signal tlwk. Ob dieses Signal als Nebenlastgröße verwendet wird oder der korrigierte Ladedruckregel-Sollwert ldsk hängt von den Bedingungen ab, die im Block 18 geprüft werden. Im Block 18 wird geprüft, ob die Bedingung Ladedruckregelung aktiv gültig ist oder die Bedingung für eine Ldr-Steuerung, wobei je nach herrschender Bedingung eine Umschaltung erfolgt.

Im Block 19 wird wiederum geprüft, ob ein Fehler im Drosselklappensensor und ein Fehler im Hauptlastsensor vorliegt. Abhängig davon wird das korrigierte Nebenlastsignal tlwk weitergeleitet.

Zur Anpassung an den Saugrohrdruck und damit die Füllung wird das korrigierte Nebenlastsignal tlwk im Tiefpaß 20 mit der Zeitkonstanten ztlwf gefiltert. Die Filterzeitkonstante ist dabei lediglich eine Funktion der Last, insbesonders bei kurbelwellensynchroner Berechnung des Filters. Sie ist für positive und negative Laständerungen unterschiedlich. Die Filterzeitkonstante ztlwf wird entweder als Zeitkonstante fallend (negativ) oder als Zeitkonstante ansteigend (positiv) gewählt, wobei diese beiden Zeitkonstanten als Kennlinie in den Blöcken 21 bzw. 22 abgelegt sind. Die Umschaltung erfolgt im Block 23, wobei der Schaltzustand des Blockes 23 abhängig ist von der Bedingung tlwk > tlwkf. Der Zugriff auf die Kennlinien erfolgt in Abhängigkeit vom aktuellen Nebenlastsignal tlw.

Am Ausgang des Tiefpasses 20 tritt das gefilterte Nebenlastsignal tlwkf auf, das zur Regelung der Brennkraftmaschine verwendet wird, sofern die im Block 24 abgefragten Bedingungen Fehler am Drosselklappensensor und Fehler am Hauptlastsensor nicht erfüllt sind.

Nach dem in der Figur dargestellten Ablaufschema wird das angepaßte Nebenlastsignal ermittelt, wobei die unterschiedlichen Bedingungen bei einer Brennkraftmaschine mit Turbolader berücksichtigt werden.

Wird das Nebenlastsignal tlw für Saug- oder Turbomotoren auf die gleiche Weise ermittelt, wie es aus der DE-P 43 22 281 bekannt ist, erfolgt die Berechnung des korrigierten Nebenlastsignales tlwk nach der Formel:

$$tlwk = tlw \cdot Fans \cdot fdkha$$

Die Faktoren Fans und fdkha sind Korrekturfaktoren für die Ansauglufttemperaturkompensation sowie ein Höhenfaktor aus der Höhenadaption. Die multiplikative Korrektur aus den beiden Faktoren (Fans · fdkha) entspricht der Dichtekompensation des Nebenlastsignales über eine Temperatur- und Druck- bzw. Höhenkompensation.

Erfindungsgemäß wird nun bei einer Brennkraftmaschine mit Turbolader unterschieden, welche Betriebsbedingung vorliegt. Im mit einem Saugmotor vergleichbaren Betriebsbereich (bei niederem Aufladegrad) mit unter niedriger Last laufendem Turbolader ergeben sich vergleichbare Abhängigkeiten wie bei Saugmotoren, d.h. in die angesaugte Luftmasse geht die Luftdichte entsprechend ein.

Beim Turbomotor mit Luftmassenregelung ergibt sich im Laderegelbereich jedoch keine Abhängigkeit der angesaugten Luftmasse von der Luftdichte, da auf eine vorgegebene Luftmasse geregelt wird. Bei Motoren mit Ladedruckregelung bleibt also lediglich der Temperatureinfluß erhalten.

Im Ladebereich ohne Regelung ergibt sich zwar eine Dichteabhängigkeit, jedoch nicht in gleichem Maße wie im reinen Saugbereich. Damit ergibt sich für einen Turbomotor mit Luftmassen- oder Ladedruckregelung folgende Berechnungsmöglichkeit für das Nebenlastsignal:

a) reiner Saugbereich: tlwk = tlw · Fans · Fkor Der Faktor Fkor entspricht dabei dem Faktor fdkha, also dem Höhenfaktor aus der Höhenadaption.

b) Ladebereich mit Luftmassen- oder Ladedruckregelung:

$$tlwk = tlw \cdot Fans \cdot 1$$

In diesem Fall ist der Faktor Fans der Korrekturfaktor für die Ansauglufttemperaturkompensation bei Ladedruckregelung. Bei Luftmassenregelung ist der Faktor Fans = 1.

Bei Motoren mit Luftmassenregelung kann im Regelbereich alternativ auf das Vorsteuerkennfeld für die Luftmassenregelung umgeschaltet werden. Es wird dann das korrigierte Nebenlastsignal, wie in der Figur dargestellt, berechnet nach der Formel:

$$tlwk = ldsk$$

ldsk ist dabei das korrigierte Soll-Lastsignal für die Luftmassenregelung. Die Umschaltung auf diesen Wert erfolgt wenn die Drosselklappe einen bestimmten Schwellwert überschreitet. Dieser Schwellwert ist DKldr, dies ist die Drosselklappenschwelle, ab der reiner Regelbetrieb gegeben ist. Das tlw-Kennfeld wird in diesem Drosselklappenbereich auf den gesteuerten Betrieb appliziert. Damit erhält man im Notlaufbetrieb, bei dem die Luftmassenregelung abgeschaltet wird, ein entsprechend niedrigeres und richtigeres Nebenlastsignal.

c) Ladebereich mit gesteuertem Betrieb:

$$tlwk = tlw \cdot Fans \cdot Fkor$$

Der Faktor Fans ist wieder der Korrekturfaktor für Ansauglufttemperaturkompensation und der Faktor Fkor ist ein Korrekturfaktor. Er wird gebildet nach der Formel:

$$Fkor = fdkha + (DKist - DKsb) \cdot (1 - fdkha)/(DKldr - DKsb)$$

Dabei bedeuten DKist ist die aktuelle Drosselklappenstellung, DKsb ist die obere Drosselklappenschwelle, bis zu der reiner Saugbetrieb (Bereich a) gegeben ist, DKldr ist die untere Drosselklappenschwelle, ab der reiner Regelbetrieb (Bereich b) vorliegt.

Die genannten Drosselklappenschwellen können beispielsweise drehzahlabhängig als Kennlinien abgelegt werden. Weiterhin ist eine Abhängigkeit zumindest der DKsb-Kennlinie von einer erkannten Höhe vorzusehen.

Die Berechnung des Nebenlastsignales bei Brennkraftmaschinen mit Turbolader, die in unterschiedlichen Betriebsbereichen ausgehend aus verschiedenen Formeln erfolgt, ermöglicht es, daß ein füllungsrichtiges Nebenlastsignal jederzeit zur Verfügung steht. Mit diesem verbesserten Nebenlastsignal kann bei einem Fehler im Hauptlastsensor bzw. dem zugehörigen Auswertebereich eine Regelung der Brennkraftmaschine ausschließlich mit Hilfe des Nebenlastsignales durchgeführt werden. Es kann so ein immer noch zuverlässiger Notlauf durchgeführt werden.

## Patentansprüche

1. Verfahren zur Lasterfassung bei einer Brennkraftmaschine, bei der ein Luftmassenmesser ein erstes Lastsignal liefert und ein zweites Lastsignal in Abhängigkeit von der Drosselklappenstellung der Drehzahl der Brennkraftmaschine gebildet wird und das zweite Signal einer Dichtekompensation unterworfen wird durch Multiplikation des nicht korrigierten zweiten Lastsignales mit wenigstens einem temperatur-und/oder druckabhängigen Korrekturfaktor, dadurch gekennzeichnet, daß die Brennkraftmaschine einen Turbolader aufweist, daß mehrere unterschiedliche Betriebszustände der Brennkraftmaschine definiert werden und ermittelt wird, welcher Betriebszustand vorliegt, wobei der erste Betriebszustand ein mit einem Saugmotor vergleichbarer Betriebsbereich ist, der zweite Betriebszustand ein Ladebereich mit Luftmassen- oder Ladedruckregelung und der dritte Betriebszustand ein Ladebereich mit gesteuertem Betrieb ist und die Ermittlung des korrigierten zweiten Lastsignales tlwk aus dem unkorrigierten Lastsignal tlw in Abhängigkeit vom ermittelten Betriebszustand nach unterschiedlichen Algorithmen erfolgt, die Korrekturfaktoren enthalten die abhängig vom ermittelten Betriebszustand gewählt werden.

2. Verfahren zur Lasterfassung nach Anspruch 1, dadurch gekennzeichnet, daß die Last im reinen Saugbereich nach der Beziehung tlwk = tlw · Fans · (Fkor = fdkha), im Ladebereich mit Luftmassen- oder Ladedruckregelung nach der Beziehung tlwk = tlw · Fans · 1 und im Ladebereich mit gesteuertem Betrieb mit der Beziehung tlwk = tlw · Fans · Fkor ermittelt wird, wobei der Faktor Fans ein Korrekturfaktor für die Ansauglufttemperaturkompensation ist und der Faktor Fkor der Höhenfaktor aus der Höhenadaption ist, der im Ladebereich mit Luftmassen- oder Ladedruckregelung dem Faktor fdkha entspricht und im Ladebereich mit gesteuertem Betrieb nach der Beziehung Fkor = fdkha + (DKist - DKsb) · (1 - fdkha)/(DKldr - DKsb) ermittelt wird, wobei DKist die aktuelle Drosselklappenstellung, DKsb die obere Drosselklappenschwelle, bis zu der reiner Saugbetrieb gegeben ist und DKldr die untere Drosselklappenschwelle, ab der reiner Regelbetrieb gegeben ist, ist.

3. Verfahren zur Lasterfassung nach Anspruch 2, dadurch gekennzeichnet, daß im Ladebereich mit Luftmassen- oder Ladedruckregelung der korrigierte zweite Lastwert alternativ aus dem Vorsteuerkennfeld für die Luftmassenregelung erhalten werden kann, wobei gilt tlwk = ldsk und ldsk dem Sollwert tl aus Luftmassenregelung entspricht.

4. Verfahren zur Lasterfassung nach Anspruch 3, dadurch gekennzeichnet, daß die Drosselklappenschwellen drehzahlabhängig als Kennlinien abgelegt sind.

5. Verfahren zur Lasterfassung nach einem der vorhergehenden Ansprüche, dadurch gekennzeichnet, daß die Auswertungen im Steuergerät der Brennkraftmaschine ablaufen und die erforderlichen Größen mittels Sensoren erfaßt und dem Steuergerät zugeführt werden und die erforderlichen Kennlinien oder Kennfelder in Speichermitteln des Steuergerätes abgelegt sind.

6. Verfahren zur Lasterfassung nach einem der vorhergehenden Ansprüche, dadurch gekennzeichnet, daß bei erkannter Fehlfunktion des Luftmassenmessers, der das erste Lastsignal liefert, ein Notlauf aktiviert wird und die Steuerung und/oder Regelung der Brennkraftmaschine mit Turbolader mittels des korrigierten zweiten Lastsignales erfolgt.

## Claims

1. Method for measuring the load in an internal combustion engine in which an air flow rate meter supplies a first load signal, and a second load signal is formed as a function of the throttle valve position and the rotational speed of the internal combustion engine, and the second signal is subjected to a density compensation by multiplying the non-corrected second load signal by at least one temperature-dependent and/or pressure-dependent correction factor, characterized in that the internal combustion engine has a turbocharger, in that a plurality of different operating states of the internal combustion engine are defined, and it is determined which operating state is present, the first operating state being an operating range which is comparable with an induction motor, the second operating state being a charging range with air flow rate control or charging pressure control, and the third operating state being a charging range with controlled operation, and the corrected, second load signal tlwk being determined from the uncorrected load signal tlw as a function of the operating state which has been determined, said corrected second load signal tlwk being determined in accordance with different algorithms which contain correction factors which are selected as a function of the operating state which has been determined.

2. Method for measuring the load according to Claim 1, characterized in that the load is determined in the pure induction range according to the relationship tlwk = tlw · Fans · (Fkor = fdkha), in the charging range with air flow rate control or charging pressure control according to the relationship tlwk = tlw · Fans · 1 and in the charging range with controlled operation with the relationship tlwk = tlw · Fans · Fkor, the factor Fans being a correction factor for the intake air temperature compensation, and the factor Fkor being the altitude factor resulting from altitude adaptation, said factor corresponding, in the charging range with air flow rate control or charging pressure control, to the factor fdkha and being determined in the charging range with controlled operation according to the relationship Fkor = fdkha + (DKist - DKsb) · (1 - fdkha)/(DKldr - DKsb), DKist being the current throttle valve position, DKsb being the upper throttle valve threshold, up to which pure induction mode operates, and DKldr being the lower throttle valve threshold, starting from which pure control mode operates.

3. Method for measuring the load according to Claim 2, characterized in that, in the charging range with air flow rate control or charging pressure control, the corrected, second load value can alternatively be obtained from the precontrol characteristic diagram for the air flow rate control, for which tlwk = ldsk and ldsk corresponds to the setpoint value tl from air flow rate control.

4. Method for measuring the load according to Claim 3, characterized in that the throttle valve thresholds are stored as characteristic curves as a function of the rotational speed.

5. Method for measuring the load according to one of the preceding claims, characterized in that the evaluations are carried out in the control unit of the internal combustion engine and the necessary variables are measured by means of sensors and are fed to the control unit, and the necessary characteristic curves or characteristic diagrams are stored in memory means of the control unit.

6. Method for measuring the load according to one of the preceding claims, characterized in that when a malfunction of the air flow rate meter which supplies the first load signal is detected, an emergency mode is actuated and the open-loop and/or closed-loop control of the internal combustion engine with turbocharger is carried out by means of the corrected second load signal.

**Revendications**

1. Procédé servant à déterminer la charge dans le cas d'un moteur à combustion interne, dans lequel un appareil de mesure de la masse de l'air délivre un premier signal de la charge et un second signal de la charge est formé en fonction de la position du clapet d'étranglement et de la vitesse de rotation du moteur à combustion interne, et le deuxième signal est soumis à une compensation quant à la densité de l'air en multipliant le deuxième signal de la charge, non corrigé, par au moins un facteur de correction qui est fonction de la température et/ou de la pression, caractérisé en ce que

- le moteur à combustion interne présente un turbocompresseur,
- plusieurs états différents de fonctionnement du moteur à combustion interne sont définis et déterminés, pour savoir quel est l'état de fonctionnement qui existe, le premier état de fonctionnement étant un état de fonctionnement comparable à celui d'un moteur à aspiration , le second état de fonctionnement étant une zone de charge avec régulation de la masse de l'air ou de la pression de la charge et le troisième état de fonctionnement étant une zone de charge avec fonctionnement commandé et la détermination du second signal corrigé de la charge tlwk étant obtenu à partir du signal de la charge non corrigé tlw en fonction de l'état de fonctionnement déterminé d'après des algorithmes différents, qui contiennent des facteurs de correction, qui sont choisis en fonction de l'état de fonctionnement déterminé.

2. Procédé pour déterminer la charge selon la revendication 1,
caractérisé en ce que
la charge est déterminée dans la zone d'aspiration proprement dite selon la relation : tlwk = tlw . Fans . (Fkor = fdkha), dans la zone de charge avec régulation de la masse de l'air ou régulation de la pression de la charge selon la relation :

$$tlwk = tlw . Fans . 1$$

et dans la zone de charge avec fonctionnement commandé selon la relation :

$$tlwk = tlw . Fans . Fkor$$

formules dans lesquelles le facteur Fans est un facteur de correction de la compensation de la température de l'air aspiré et le facteur Fkor est le facteur d'amplitude provenant de l'adaptation en amplitude, qui correspond dans la zone de charge avec régulation de la masse de l'air ou de la pression de la charge au facteur fdkha et dans la zone de charge avec fonctionnement commandé est déterminé selon la relation :

$$Fkor = fdkha + (Dkist - DKsb) . (1 - fdkha)/(DKldr - DKsb)$$

formule dans laquelle DKist est la position actuelle du clapet d'étranglement, DKsb est le seuil supérieur du clapet d'étranglement, jusqu'à ce que l'on ait le fonctionnement d'aspiration proprement dit, et DKldr est le seuil inférieur du clapet d'étranglement, à partir duquel on a le fonctionnement réglé proprement dit.

3. Procédé servant à déterminer la charge selon al revendication 2,
caractérisé en ce que
dans la zone de la charge avec régulation de la masse de l'air ou de la pression de la charge on peut obtenir la deuxième valeur corrigée de la charge en variante à partir du champ caractéristique de la précommande pour la

EP 0 752 058 B1

régulation de la masse de l'air, tlwk étant égal à ldsk et ldsk correspondant à la valeur de consigne tl provenant de la régulation de la masse de l'air.

4. Procédé servant à déterminer la charge selon la revendication 3,
caractérisé en ce que
les seuils du clapet d'étranglement sont déposés en fonction de la vitesse de rotation sous la forme de courbes caractéristiques.

5. Procédé servant à déterminer la charge selon l'une des revendications précédentes,
caractérisé en ce que
les exploitations se déroulent dans l'appareil de commande du moteur à combustion interne et les grandeurs nécessaires sont déterminées au moyen de détecteurs et sont amenées à l'appareil de commande et les courbes caractéristiques ou les champs caractéristiques nécessaires sont déposés dans des organes à mémoire de l'appareil de commande.

6. Procédé servant à déterminer la charge selon l'une des revendications précédentes,
caractérisé en ce que
quand on a identifié un fonctionnement défectueux de l'appareil de mesure de la masse de l'air, qui délivre le premier signal de la charge, on active une marche en urgence et la commande et/ou la régulation du moteur à combustion interne avec turbocompresseur a lieu au moyen du deuxième signal de charge corrigé.

7

FIG. 1